# EUROPEAN PATENT SPECIFICATION

(11) **EP 3 296 594 B1**
(45) Date of publication and mention of the grant of the patent: **15.06.2022**
(21) Application number: 16796279.4
(22) Date of filing: 26.04.2016
(51) Int. Cl.: F16H 25/24, F16H 25/22, F16J 15/46

(54) **BALL SCREW**
KUGELSCHRAUBE
VIS À BILLES

(30) Priority: 15.05.2015 JP 2015100220; 15.05.2015 JP 2015100221
(43) Date of publication of application: 21.03.2018
(73) Proprietor: NSK Ltd., Tokyo 141-8560 (JP)
(72) Inventor: OOTANI, Yushi, Fujisawa-shi Kanagawa 252-0811 (JP)
(74) Representative: Rings, Rolf
(86) International application number: PCT/JP2016/063082
(87) International publication number: WO 2016/185885

(56) References cited:
- EP-A1- 1 193 422
- DE-A1- 10 134 873
- DE-U1- 20 213 742
- JP-A- H10 244 436
- JP-A- 2005 337 351
- JP-A- 2007 321 886
- JP-A- 2008 133 944
- JP-A- 2009 014 120
- JP-U- 3 093 085
- JP-U- H0 439 354

## Description

### Technical Field

The present invention relates to ball screws.

### Background Art

In order to prevent entry of foreign matter such as dust or abrasion powder into the inside of a nut, a ball screw includes seals (see, e.g. PTL 1 or 2). However, when the particle size of foreign matter is very small, there is a possibility that entry of the foreign matter cannot be prevented by the seals.

A further prior art according to JP 2009 014120 A discloses a linear screw device with means for feeding a load path for the balls of the screw device with new grease, in which a helical spacer is loosely fitted to a land between the nut and the screw shaft of this device.

### Citation List

### Patent Literatures

PTL 1: JP 2008-133944 A
PTL 2: JP 2004-68988 A

### Summary of Invention

### Technical Problem

Therefore, it is an object of the present invention to solve the above-described problem of the prior art and to provide a ball screw that can prevent entry of foreign matter into the inside of a nut even when the particle size of the foreign matter is very small.

This problem is solved by means of a ball screw with the features of claim 1. Preferred forms of realization of the invention are defined in the dependent claims.

### Solution to Problem

In order to solve the above-described problem, there is provided a ball screw including the features of claim 1 according to the present invention.

In the ball screw according to the above-described one aspect, the gas supply portion may include a discharge port configured to discharge the gas into the inner space, and the discharge port may be disposed at at least one of an axially middle portion and an axial end portion of the inner peripheral surface of the nut.

In order to solve the above-described problem, essentially, a ball screw according to another aspect of the present invention includes: a screw shaft; a nut; and a plurality of balls, wherein the screw shaft passes through the nut, a helical groove formed on an outer peripheral surface of the screw shaft and a helical groove formed on an inner peripheral surface of the nut face each other to form a ball rolling path in which the balls roll, the balls are disposed in the ball rolling path, the nut includes a ball return path configured to return the balls from an end point to a start point of the ball rolling path, and by rotating the screw shaft and the nut relative to each other, the screw shaft and the nut are configured to move relative to each other in an axial direction via the balls circulating in a circulation path formed by the ball rolling path and the ball return path and rolling in the ball rolling path, the ball screw further including: a gas supply portion configured to supply a gas to an inner space formed between the outer peripheral surface of the screw shaft and the inner peripheral surface of the nut; seals respectively attached to both axial ends of the inner peripheral surface of the nut and sealing openings at axial ends of the inner space; and a circulation component attached to the nut and forming the ball return path, wherein a gap between the nut and the circulation component is sealed with a sealing material, and the seals have sealability such that a pressure in the inner space becomes higher than a pressure outside the inner space by the gas supplied from the gas supply portion.

In the ball screw according to the above-described other aspect, the circulation component may be fixed to the nut via a fixing component, and a gap between the fixing component and the nut may be sealed with the sealing material.

Further, in the ball screw according to the above-described one aspect and the ball screw according to the above-described other aspect, the gas supply portion may be configured to supply oil drops of lubricating oil and the gas to the inner space to perform oil-air lubrication or oil-mist lubrication.

### Advantageous Effects of Invention

A ball screw of the present invention prevents entry of foreign matter into the inside of a nut even when the particle size of the foreign matter is very small.

### Brief Description of Drawings

FIG. 1 is a sectional view of a ball screw according to a first embodiment of the present invention;
FIG. 2 is a sectional view for explaining a first modification of the ball screw according to the first embodiment;
FIG. 3 is a sectional view for explaining a second modification of the ball screw according to the first embodiment;
FIG. 4 is a sectional view for explaining a third modification of the ball screw according to the first embodiment;
FIG. 5 is a plan view of a ball screw according to a second embodiment of the present invention;
FIG. 6 is a plan view for explaining a first modification of the ball screw according to the second embodiment; and
FIG. 7 is a plan view for explaining a second modification of the ball screw according to the second embodiment.

### Description of Embodiments

Embodiments of the present invention will be described in detail with reference to the drawings.

### [First Embodiment]

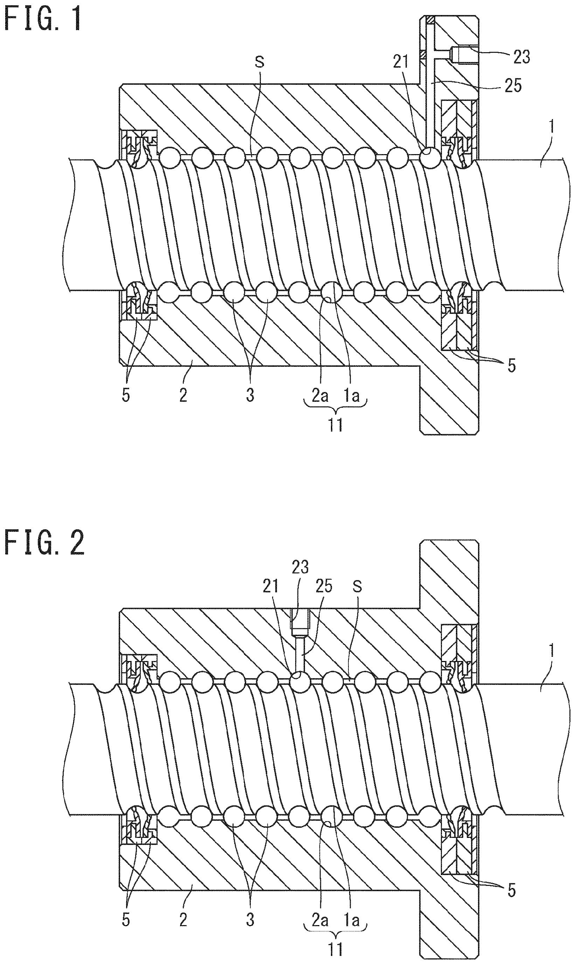

FIG. 1 is a sectional view illustrating a ball screw according to a first embodiment of the present invention, taken along a plane in an axial direction.

As illustrated in FIG. 1, the ball screw includes a generally cylindrical screw shaft 1, a generally hollow cylindrical nut 2, and a plurality of balls 3. The screw shaft 1 passes through the nut 2.

A helically continuous helical groove 1a is formed on an outer peripheral surface of the screw shaft 1, while a helically continuous helical groove 2a is formed on an inner peripheral surface of the nut 2. These both helical grooves 1a, 2a face each other to form a helical ball rolling path 11 in which the balls 3 roll. The plurality of balls 3 are rollably disposed in the ball rolling path 11.

Although not illustrated in FIG. 1, the ball screw of the first embodiment includes a ball return path that allows the balls 3 to return from an end point to a start point of the ball rolling path 11 for circulation. An endless circulation path is formed by the ball rolling path 11 and the ball return path.

In the ball screw of the first embodiment, the balls 3 rotate around the screw shaft 1 while moving in the ball rolling path 11 and reach the end point of the ball rolling path 11, where the balls 3 are picked up from the ball rolling path 11 and enter one end of the ball return path. The balls 3 having entered the ball return path pass through the inside of the ball return path and reach the other end of the ball return path, where the balls 3 are returned to the start point of the ball rolling path 11.

Accordingly, the ball screw of the first embodiment is configured such that when the screw shaft 1 and the nut 2 are rotated relative to each other, the screw shaft 1 and the nut 2 move linearly relative to each other in the axial direction via rolling of the balls 3 in the ball rolling path 11. Since the balls 3 are configured to circulate endlessly in the endless circulation path, the screw shaft 1 and the nut 2 are allowed to continuously move linearly relative to each other.

As illustrated in FIG. 1, the ball screw of the first embodiment includes generally annular contact seals 5, 5 at both axial ends of the nut 2. More specifically, outer diameter portions of the contact seals 5, 5 are respectively attached to both axial ends of the inner peripheral surface of the nut 2, while inner diameter portions of the contact seals 5, 5 are in sliding contact with the outer peripheral surface of the screw shaft 1, thereby sealing openings at both axial ends of an inner space S formed between the outer peripheral surface of the screw shaft 1 and the inner peripheral surface of the nut 2.

Since entry of foreign matter into the inside of the nut 2 (the inner space S) can be prevented by the contact seals 5, 5, damage to surfaces of the balls 3 or surfaces of the helical grooves 1a, 2a due to foreign matter is suppressed, so that the ball screw of the first embodiment has a long life.

While the manner of attaching the contact seal 5 to the nut 2 is not particularly limited, the outer diameter portion of the contact seal 5 and the inner peripheral surface of the nut 2 may be spigotted together.

Further, the ball screw of the first embodiment includes a gas supply portion that supplies a gas to the inner space S. The gas supply portion is a lubrication mechanism that supplies oil drops of lubricating oil and a gas to the inner space S, thereby performing oil-air lubrication or oil-mist lubrication of the ball screw. However, when grease is disposed in the inner space S to lubricate the ball screw by grease lubrication, the gas supply portion may be a gas supply mechanism that supplies only a gas to the inner space S.

The configuration of the gas supply portion is not particularly limited as long as it can supply a gas to the inner space S. In the example of FIG. 1, a discharge port 21 for discharging a mixed gas of oil drops of lubricating oil and a gas into the inner space S is open at an axial end portion of the inner peripheral surface of the nut 2. From a gas sending portion (not illustrated) that manufactures a mixed gas of oil drops of the lubricating oil and the gas and sends the mixed gas, the mixed gas of the oil drops of the lubricating oil and the gas is introduced into an introduction port 23 that is open at an axial end face of the nut 2 (an end face of a flange protruding radially outward from an outer peripheral surface of the nut 2), then passes through a bent introduction passage 25 passing through the nut 2 and establishing communication between the introduction port 23 and the discharge port 21, and then is discharged from the discharge port 21 into the inner space S. The lubricant in the mixed gas discharged from the discharge port 21 is used for lubricating the balls 3 and the helical grooves 1a, 2a.

Since the contact seal 5 has high sealability, when the mixed gas is supplied to the inner space S from the gas supply portion, the pressure in the inner space S becomes higher than the pressure outside the ball screw (the nut 2). As a result, compared to a case where the pressure in the inner space S and the pressure outside the ball screw are equal to each other, entry of foreign matter into the inside of the nut 2 (the inner space S) is more unlikely to occur. Therefore, even when the particle size of foreign matter is very small, it is possible to prevent entry of the foreign matter into the inside of the nut 2, so that the ball screw of the first embodiment has a very long life.

While the kind of gas supplied to the inner space S is not particularly limited, example of the gas includes air, nitrogen, and argon. The number of contact seals 5 to be disposed is two at each of the axial ends of the inner peripheral surface of the nut 2. FIG. 1 illustrates an example in which the ball screw is attached with two contact seals 5 at each of the axial ends of the inner peripheral surface of the nut 2 (four in total in the entire ball screw).

When the two contact seals 5 are attached at each end as illustrated in FIG. 1, one of the contact seals 5 (e.g. the contact seal 5 on the axially outer side) may be a seal that is excellent in performance to prevent entry of foreign matter, while the other contact seal 5 (e.g. the contact seal 5 on the axially inner side) may be a seal that is excellent in airtightness.

The ball screw of the first embodiment thus configured has a very long life because entry of foreign matter into the inside of the nut 2 (the inner space S) is unlikely to occur even when the particle size of the foreign matter is very small, and therefore, is suitable for use in an environment with much foreign matter. For example, when machining is performed using a machine tool, a large amount of cutting powder is generated, and therefore, a ball screw incorporated in the machine tool is likely to have a short life because the cutting powder is likely to enter the inside of a nut 2. However, in the ball screw of the first embodiment, since the pressure in the inner space S is higher than the pressure outside the ball screw (the nut 2), even when the particle size of foreign matter is very small, entry of the foreign matter into the inside of the nut 2 (the inner space S) is unlikely to occur. Therefore, the ball screw of the first embodiment has a long life, for example, even when it is used by being incorporated in a machine tool as a member constituting a feed mechanism.

The first embodiment illustrates one example of the present invention, and the present invention is not limited to the first embodiment. Various changes or improvements can be added to the first embodiment, and modes added with such changes or improvements can also be included in the present invention. For example, the cross-sectional shape of the helical groove 1a, 2a (the shape of a cross section when taken along a plane perpendicular to a continuing direction of the helical groove 1a, 2a) may be a gothic arch shape forming a generally V-shape combining two circular arcs with different centers of curvature or may be a curved shape formed by a single circular arc.

In the first embodiment, the discharge port 21 is open at the axial end portion of the inner peripheral surface of the nut 2, but, as illustrated in a first modification of FIG. 2, a discharge port 21 may be open at an axially middle portion of the inner peripheral surface of the nut 2. As illustrated in FIG. 2, an introduction port 23 is open at an axially middle portion of the outer peripheral surface of the nut 2 and communicates with the discharge port 21 open at the axially middle portion of the inner peripheral surface of the nut 2 via an introduction passage 25 extending linearly in a radial direction of the nut 2. Alternatively, an introduction port 23 may be open at the axial end face of the nut 2 (the end face of the flange) and communicate with the discharge port 21 open at the axially middle portion of the inner peripheral surface of the nut 2 via a bent introduction passage 25.

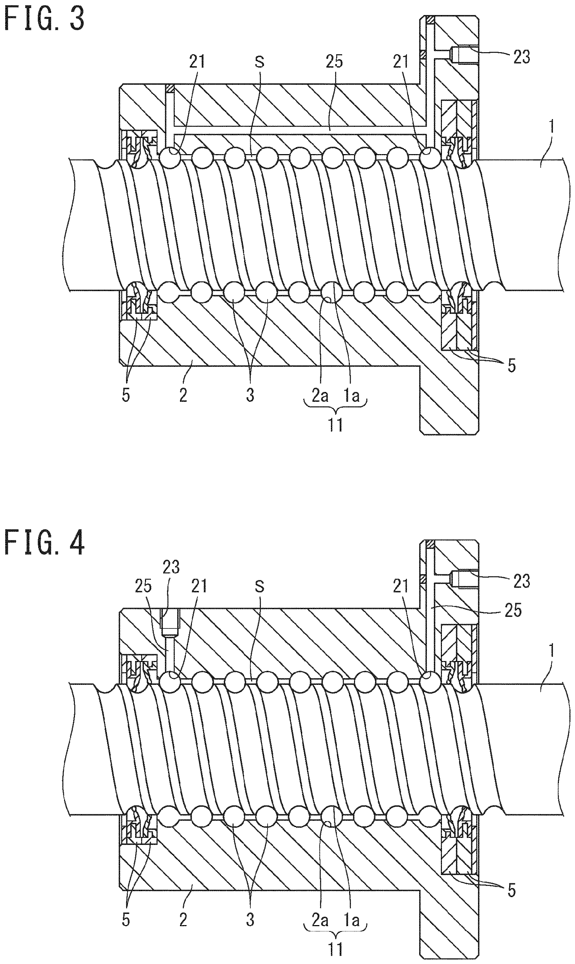

Further, in the ball screw of the first embodiment and the ball screw of the first modification, the number of discharge ports 21 open at the inner peripheral surface of the nut 2 is one, but may be two or more. For example, although not illustrated, the discharge ports 21 may be open at both the axially middle portion and the axial end portion of the inner peripheral surface of the nut 2. Alternatively, as illustrated in a second modification of FIG. 3, two discharge ports 21 may be respectively open at both axial end portions of the inner peripheral surface of the nut 2.

Since it is preferable to intensively lubricate the positions, where the balls 3 are picked up, in the ball rolling path 11, it is preferable that the discharge ports 21 be open at both axial end portions of the inner peripheral surface of the nut 2 to allow the lubricating oil to be smoothly supplied to those positions.

In the second modification of FIG. 3, the number of introduction ports 23 is one, and the introduction port 23 open at the axial end face of the nut 2 (the end face of the flange) and the two discharge ports 21 open at both axial end portions of the inner peripheral surface of the nut 2 communicate with each other via a bifurcated introduction passage 25.

Alternatively, a plurality of introduction ports 23 may be provided. That is, as illustrated in a third modification of FIG. 4, introduction ports 23 respectively corresponding to two discharge ports 21 may be provided. Specifically, the introduction port 23 open at the axial end face of the nut 2 (the end face of the flange) and one of the discharge ports 21 communicate with each other via a bent introduction passage 25, while the introduction port 23 open at an axial end portion of the outer peripheral surface of the nut 2 and the other discharge port 21 communicate with each other via an introduction passage 25 extending linearly in the radial direction of the nut 2.

Further, the kind of ball return path is not particularly limited, and it is possible to apply a ball return path formed by a circulation component such as a return tube, a circulation piece, an end cap, or an end deflector. However, in order to maintain the airtightness of the inner space S, it is preferable to employ a ball return path of the internal circulation type. That is, it is preferable that a ball return path be formed by a recessed groove (not illustrated) that is formed by recessing a part of the inner peripheral surface of the nut 2.

When the ball return path formed by the circulation component is employed, since the ball return path is provided to the ball screw by attaching the circulation component as the separate member to the nut, the airtightness between the nut and the circulation component arises as a problem. However, with the ball return path of the internal circulation type, since the circulation component is not used, the airtightness of the inner space S can be easily maintained high.

### [Second Embodiment]

Since the structure of a ball screw of a second embodiment is approximately the same as the ball screw of the first embodiment, a description thereof will be given with reference to FIG. 1. FIG. 1 is a sectional view illustrating the ball screw according to the second embodiment of the present invention, taken along a plane in an axial direction.

As illustrated in FIG. 1, the ball screw includes a generally cylindrical screw shaft 1, a generally hollow cylindrical nut 2, and a plurality of balls 3. The screw shaft 1 passes through the nut 2.

A helically continuous helical groove 1a is formed on an outer peripheral surface of the screw shaft 1, while a helically continuous helical groove 2a is formed on an inner peripheral surface of the nut 2. These both helical grooves 1a, 2a face each other to form a helical ball rolling path 11 in which the balls 3 roll. The plurality of balls 3 are rollably disposed in the ball rolling path 11.

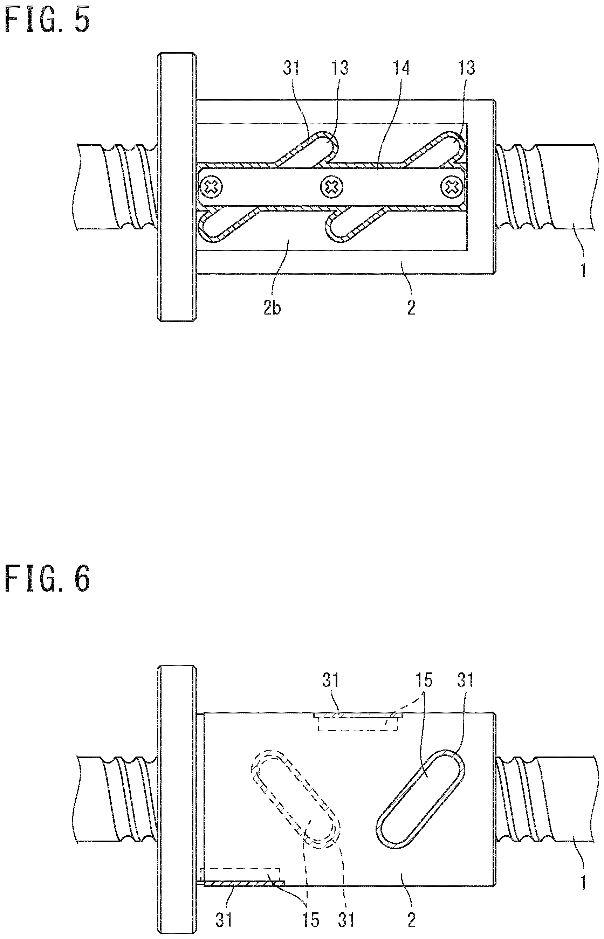

Further, the ball screw of the second embodiment includes a ball return path that allows the balls 3 to return from an end point to a start point of the ball rolling path 11 for circulation. That is, as illustrated in FIG. 5, the ball screw of the second embodiment includes a return tube 13 as a circulation component, and the ball return path is formed by attaching the return tube 13 to the nut 2 (neither the return tube 13 nor the ball return path is illustrated in FIG. 1). An endless circulation path is formed by the ball rolling path 11 and the ball return path.

Herein, the return tube 13 will be described in detail. A part of an outer peripheral surface of the nut 2 is flatly shaved and cut out so that a flat portion 2b parallel to the axial direction is formed. The nut 2 is provided with a pair of through-holes that are open at the flat portion 2b and communicate with the helical groove 2a of the nut 2 at the start point and the end point of the ball rolling path 11, and both end portions of the return tube 13 as a tubular member bent in a generally C-shape are inserted into both through-holes from the flat portion 2b side. A middle portion, located outside both through-holes, of the return tube 13 is disposed on the flat portion 2b and pressed by a fixing component 14 so as to be fixed to the flat portion 2b. As illustrated in FIG. 5, a plurality of return tubes 13 may be attached to the single nut 2, and in that event, two pairs or more of through-holes are provided.

Gaps between the nut 2 and the return tube 13 are sealed with a sealing material 31. That is, a gap between the middle portion of the return tube 13 and the flat portion 2b of the nut 2 and gaps between both end portions of the return tube 13 and inner surfaces of both through-holes of the nut 2 are sealed with the sealing material 31. Further, a gap between the fixing component 14 and the nut 2, i.e. a gap between the fixing component 14 and the flat portion 2b of the nut 2, may also be sealed with the sealing material 31.

The kind of sealing material is not particularly limited, and a general sealing material can be used as long as it can cut off ventilation through the gaps between the nut 2 and the return tube 13 to enhance the airtightness of the inside of the nut 2. For example, sealing may be performed by filling the gaps between the nut 2 and the return tube 13 with a paste-like amorphous sealing material (caulking material) containing a resin, a rubber, or the like and then curing the sealing material, or sealing may be performed by fitting a shaped sealing material obtained by molding a resin, a rubber, or the like into the gaps between the nut 2 and the return tube 13.

In the ball screw of the second embodiment, the balls 3 rotate around the screw shaft 1 while moving in the ball rolling path 11 and reach the end point of the ball rolling path 11, where the balls 3 are picked up from the ball rolling path 11 and enter one end of the ball return path. The balls 3 having entered the ball return path pass through the inside of the ball return path and reach the other end of the ball return path, where the balls 3 are returned to the start point of the ball rolling path 11.

Accordingly, the ball screw of the second embodiment is configured such that when the screw shaft 1 and the nut 2 are rotated relative to each other, the screw shaft 1 and the nut 2 move linearly relative to each other in the axial direction via the balls 3 circulating in the circulation path formed by the ball rolling path 11 and the ball return path and rolling in the ball rolling path 11. Since the balls 3 are configured to circulate endlessly in the endless circulation path, the screw shaft 1 and the nut 2 are allowed to continuously move linearly relative to each other.

As illustrated in FIG. 1, the ball screw of the second embodiment includes generally annular contact seals 5, 5 at both axial ends of the nut 2. More specifically, outer diameter portions of the contact seals 5, 5 are respectively attached to both axial ends of the inner peripheral surface of the nut 2, while inner diameter portions of the contact seals 5, 5 are in sliding contact with the outer peripheral surface of the screw shaft 1, thereby sealing openings at both axial ends of an inner space S formed between the outer peripheral surface of the screw shaft 1 and the inner peripheral surface of the nut 2.

Since entry of foreign matter into the inside of the nut 2 (the inner space S) can be prevented by the contact seals 5, 5, damage to surfaces of the balls 3 or surfaces of the helical grooves 1a, 2a due to foreign matter is suppressed, so that the ball screw of the second embodiment has a long life.

While the manner of attaching the contact seal 5 to the nut 2 is not particularly limited, the outer diameter portion of the contact seal 5 and the inner peripheral surface of the nut 2 may be spigotted together.

Further, the ball screw of the second embodiment includes a gas supply portion that supplies a gas to the inner space S. The gas supply portion is a lubrication mechanism that supplies oil drops of lubricating oil and a gas to the inner space S, thereby performing oil-air lubrication or oil-mist lubrication of the ball screw. However, when grease is disposed in the inner space S to lubricate the ball screw by grease lubrication, the gas supply portion may be a gas supply mechanism that supplies only a gas to the inner space S.

The configuration of the gas supply portion is not particularly limited as long as it can supply a gas to the inner space S. In the example of FIG. 1, a discharge port 21 for discharging a mixed gas of oil drops of lubricating oil and a gas into the inner space S is open at an axial end portion of the inner peripheral surface of the nut 2. From a gas sending portion (not illustrated) that manufactures a mixed gas of oil drops of the lubricating oil and the gas and sends the mixed gas, the mixed gas of the oil drops of the lubricating oil and the gas is introduced into an introduction port 23 that is open at an axial end face of the nut 2 (an end face of a flange protruding radially outward from an outer peripheral surface of the nut 2), then passes through a bent introduction passage 25 passing through the nut 2 and establishing communication between the introduction port 23 and the discharge port 21, and then is discharged from the discharge port 21 into the inner space S. The lubricant in the mixed gas discharged from the discharge port 21 is used for lubricating the balls 3 and the helical grooves 1a, 2a.

Since the contact seal 5 has high sealability and further the gaps between the nut 2 and the return tube 13 are sealed with the sealing material 31, the airtightness of the inside of the nut 2 (the inner space S) is high. Therefore, when the mixed gas is supplied to the inner space S from the gas supply portion, the pressure in the inner space S becomes higher than the pressure outside the ball screw (the nut 2) . As a result, compared to a case where the pressure in the inner space S and the pressure outside the ball screw are equal to each other, entry of foreign matter into the inside of the nut 2 (the inner space S) is more unlikely to occur. Therefore, even when the particle size of foreign matter is very small, it is possible to prevent entry of the foreign matter into the inside of the nut 2, so that the ball screw of the second embodiment has a very long life.

While the kind of gas supplied to the inner space S is not particularly limited, air, nitrogen, or argon may be cited, for example. The number of contact seals 5 to be disposed may be one or two or more at each of the axial ends of the inner peripheral surface of the nut 2. FIG. 1 illustrates an example in which the ball screw is attached with two contact seals 5 at each of the axial ends of the inner peripheral surface of the nut 2 (four in total in the entire ball screw) .

When the two contact seals 5 are attached at each end as illustrated in FIG. 1, one of the contact seals 5 (e.g. the contact seal 5 on the axially outer side) may be a seal that is excellent in performance to prevent entry of foreign matter, while the other contact seal 5 (e.g. the contact seal 5 on the axially inner side) may be a seal that is excellent in airtightness.

The ball screw of the second embodiment thus configured has a very long life because entry of foreign matter into the inside of the nut 2 (the inner space S) is unlikely to occur even when the particle size of the foreign matter is very small, and therefore, is suitable for use in an environment with much foreign matter. For example, when machining is performed using a machine tool, a large amount of cutting powder is generated, and therefore, a ball screw incorporated in the machine tool is likely to have a short life because the cutting powder is likely to enter the inside of a nut 2. However, in the ball screw of the second embodiment, since the pressure in the inner space S is higher than the pressure outside the ball screw (the nut 2), even when the particle size of foreign matter is very small, entry of the foreign matter into the inside of the nut 2 (the inner space S) is unlikely to occur. Therefore, the ball screw of the second embodiment has a long life, for example, even when it is used by being incorporated in a machine tool as a member constituting a feed mechanism.

The second embodiment illustrates one example of the present invention, and the present invention is not limited to the second embodiment. Various changes or improvements can be added to the second embodiment, and modes added with such changes or improvements can also be included in the present invention. For example, the cross-sectional shape of the helical groove 1a, 2a (the shape of a cross section when taken along a plane perpendicular to a continuing direction of the helical groove 1a, 2a) may be a gothic arch shape forming a generally V-shape combining two circular arcs with different centers of curvature or may be a curved shape formed by a single circular arc.

In the second embodiment, the discharge port 21 is open at the axial end portion of the inner peripheral surface of the nut 2, but, although not illustrated, a discharge port 21 may be open at an axially middle portion of the inner peripheral surface of the nut 2. In that case, an introduction port 23 is open at an axially middle portion of the outer peripheral surface of the nut 2 and communicates with the discharge port 21 open at the axially middle portion of the inner peripheral surface of the nut 2 via an introduction passage 25 extending linearly in a radial direction of the nut 2. Alternatively, an introduction port 23 may be open at the axial end face of the nut 2 (the end face of the flange) and communicate with the discharge port 21 open at the axially middle portion of the inner peripheral surface of the nut 2 via a bent introduction passage 25.

Further, in the ball screw of the second embodiment, the number of discharge ports 21 open at the inner peripheral surface of the nut 2 is one, but may be two or more. For example, although not illustrated, the discharge ports 21 may be open at both the axially middle portion and the axial end portion of the inner peripheral surface of the nut 2. Alternatively, although not illustrated, two discharge ports 21 may be respectively open at both axial end portions of the inner peripheral surface of the nut 2.

Since it is preferable to intensively lubricate the positions, where the balls 3 are picked up, in the ball rolling path 11, it is preferable that the discharge ports 21 be open at both axial end portions of the inner peripheral surface of the nut 2 to allow the lubricating oil to be smoothly supplied to those positions.

Even when the number of discharge ports 21 is two or more, the number of introduction ports 23 can be made one. For example, the introduction port 23 open at the axial end face of the nut 2 (the end face of the flange) and the two discharge ports 21 open at both axial end portions of the inner peripheral surface of the nut 2 may be configured to communicate with each other via a bifurcated introduction passage 25.

Alternatively, when the number of discharge ports 21 is two or more, introduction ports 23 respectively corresponding to the plurality of discharge ports 21 may be provided. When the number of discharge ports 21 is two, for example, the introduction port 23 open at the axial end face of the nut 2 (the end face of the flange) and one of the discharge ports 21 may be configured to communicate with each other via a bent introduction passage 25, while the introduction port 23 open at an axial end portion of the outer peripheral surface of the nut 2 and the other discharge port 21 may be configured to communicate with each other via an introduction passage 25 extending linearly in the radial direction of the nut 2.

Further, while the circulation component forming the ball return path is the return tube 13 in the ball screw of the second embodiment, the kind of circulation component is not particularly limited and may be a circulation piece, an end cap, an end deflector, or the like.

For example, as illustrated in FIG. 6, the nut 2 may be provided with piece holes that are open at the outer peripheral surface of the nut 2 and communicate with the helical groove 2a of the nut 2, and circulation pieces 15 may be inserted into the piece holes, thereby forming a ball return path. In the example of FIG. 6, four circulation pieces 15 are attached to the nut 2. When the circulation pieces 15 are used, gaps between the nut 2 and the circulation pieces 15, i.e. gaps between inner surfaces of the piece holes and outer surfaces of the circulation pieces 15, may be sealed with the sealing material 31.

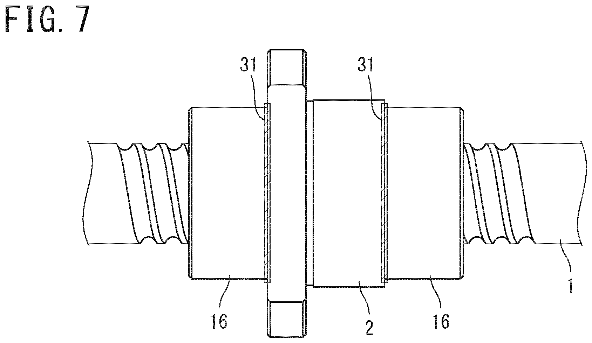

As illustrated in FIG. 7, a ball return path may be formed by attaching end caps 16, 16 to both axial ends of the nut 2. When the end caps 16 are used, gaps between the nut 2 and the end caps 16, i.e. gaps between axial end faces of the nut 2 and end faces, facing the axial end faces of the nut 2, of the end caps 16, may be sealed with the sealing material 31. Reference Signs List

- 1: screw shaft
- 1a: helical groove
- 2: nut
- 2a: helical groove
- 3: ball
- 5: contact seal
- 11: ball rolling path
- 13: return tube (circulation component)
- 14: fixing component
- 15: circulation piece (circulation component)
- 16: end cap (circulation component)
- 21: discharge port
- 23: introduction port
- 25: introduction passage
- 31: sealing material
- S: inner space

## Claims

1. A ball screw comprising:
a screw shaft (1);
a nut (2); and
a plurality of balls (3),
wherein the screw shaft (1) passes through the nut (2),
a helical groove (1a) formed on an outer peripheral surface of the screw shaft (1) and a helical groove (2a) formed on an inner peripheral surface of the nut (2) face each other to form a ball rolling path (11) in which the balls (3) roll,
the balls (3) are disposed in the ball rolling path (11), and
by rotating the screw shaft (1) and the nut (2) relative to each other, the screw shaft (1) and the nut (2) are configured to move relative to each other in an axial direction via rolling of the balls (3) in the ball rolling path (11),
the ball screw further comprising:
a gas supply portion configured to supply a gas to an inner space formed between the outer peripheral surface of the screw shaft (1) and the inner peripheral surface of the nut (2); and
seals (5) respectively attached to both axial ends of the inner peripheral surface of the nut (2) and sealing openings at axial ends of the inner space,
**characterized in that**
the seals (5) include an inner seal in the axial direction and an outer seal in the axial direction and at least the inner seal has sealability such that a pressure in the inner space becomes higher than a pressure outside the inner space by the gas supplied from the gas supply portion.

2. The ball screw according to claim 1, wherein the gas supply portion includes a discharge port (21) configured to discharge the gas into the inner space, and the discharge port (21) is disposed at at least one of an axially middle portion and an axial end portion of the inner peripheral surface of the nut (2).

3. A ball screw according to claim 1, wherein
the nut (2) includes a ball return path configured to return the balls (3) from an end point to a start point of the ball rolling path (11),
a circulation component (13; 15) is attached to the nut (2) and forming the ball return path, and
a gap between the nut (2) and the circulation component (13; 15) is sealed with a sealing material (31).

4. The ball screw according to claim 3, wherein the circulation component (13; 15) is fixed to the nut (2) via a fixing component (14), and a gap between the fixing component (14) and the nut (2) is sealed with the sealing material (31).

5. The ball screw according to any one of claims 1 to 4, wherein the gas supply portion is configured to supply oil drops of lubricating oil and the gas to the inner space to perform oil-air lubrication or oil-mist lubrication.

## Patentansprüche

1. Kugelschraube, umfassend:
eine Schraubenwelle (1);
eine Mutter (2); und
mehrere Kugeln (3), wobei
die Schraubenwelle (1) die Mutter (2) durchdringt,
eine spiralförmige Nut (1a), die auf einer äußeren Umfangsfläche der Schraubenwelle (1) ausgebildet ist, und eine spiralförmige Nut (2a), die auf einer inneren Umfangsfläche der Mutter (2) ausgebildet ist, einander zugewandt sind, um einen Kugelrollweg (11) zu bilden, in dem die Kugeln (3) rollen,
die Kugeln (3) in der Kugelrollbahn (11) angeordnet sind, und
die Schraubenwelle (1) und die Mutter (2) so konfiguriert sind, dass sie durch Drehen der Schraubenwelle (1) und der Mutter (2) relativ zueinander sich durch Rollen der Kugeln (3) in der Kugelrollbahn (11) in einer axialen Richtung relativ zueinander bewegen,
wobei die Kugelschraube ferner Folgendes umfasst:
einen Gasversorgungsabschnitt, der so konfiguriert ist, dass er einem Innenraum, der zwischen der Außenumfangsfläche der Schraubenwelle (1) und der Innenumfangsfläche der Mutter (2) gebildet ist, ein Gas zuführt; und
Dichtungen (5), die jeweils an beiden axialen Enden der inneren Umfangsfläche der Mutter (2) angebracht sind und Öffnungen an axialen Enden des Innenraums abdichten,
**dadurch gekennzeichnet, dass**
die Dichtungen (5) eine innere Dichtung in der axialen Richtung und eine äußere Dichtung in der axialen Richtung umfassen und zumindest die innere Dichtung eine solche Dichtfähigkeit aufweist, dass ein Druck im Innenraum durch das aus dem Gasversorgungsabschnitt zugeführte Gas höher wird als ein Druck außerhalb des Innenraums.

2. Kugelschraube nach Anspruch 1, wobei der Gaszuführabschnitt eine Ablassöffnung (21) umfasst, die konfiguriert ist, um das Gas in den Innenraum abzugeben, und die Ablassöffnung (21) an mindestens einem axial mittleren Abschnitt und einen axialen Endabschnitt der inneren Umfangsfläche der Mutter (2) angeordnet ist.

3. Kugelschraube nach Anspruch 1, wobei
die Mutter (2) einen Kugelrückführweg beinhaltet, der konfiguriert ist, um die Kugeln (3) von einem Endpunkt zu einem Startpunkt des Kugelrollwegs (11) zurückzuführen,
ein Umlaufbauteil (13; 15) an der Mutter (2) angebracht ist und den Kugelrückführweg bildet, und
ein Spalt zwischen der Mutter (2) und dem Umlaufbauteil (13; 15) mit einem Dichtungsmaterial (31) abgedichtet ist.

4. Kugelschraube nach Anspruch 3, wobei das Umlaufbauteil (13; 15) an der Mutter (2) über ein Befestigungsbauteil (14) befestigt ist und ein Spalt zwischen dem Befestigungsbauteil (14) und der Mutter (2) mit dem Dichtungsmaterial (31) abgedichtet ist.

5. Kugelschraube nach einem der Ansprüche 1 bis 4, wobei der Gasversorgungsabschnitt so konfiguriert ist, dass er Öltropfen aus Schmieröl und das Gas dem Innenraum zuführt, um eine Öl-Luft-Schmierung oder eine Ölnebel-Schmierung durchzuführen.

## Revendications

1. Une vis à billes comprenant :
une tige de vis (1) ;
un écrou (2) ; et
une pluralité de billes (3),
dans lequel la tige de vis (1) traverse l'écrou (2),
une rainure hélicoïdale (1a) formée sur une surface périphérique extérieure de la tige de vis (1) et une rainure hélicoïdale (2a) formée sur une surface périphérique intérieure de l'écrou (2) se font face pour former un chemin de roulement de billes (11) dans lequel les billes (3) roulent,
les billes (3) sont disposées dans le chemin de roulement des billes (11), et
en faisant tourner la tige de vis (1) et l'écrou (2) l'un par rapport à l'autre, la tige de vis (1) et l'écrou (2) sont configurés pour se déplacer l'un par rapport à l'autre dans une direction axiale par le biais du roulement des billes (3) dans le chemin de roulement des billes (11),
la vis à billes comprenant en outre :
une partie d'alimentation en gaz configurée pour fournir un gaz à un espace intérieur formé entre la surface périphérique extérieure de la tige de vis (1) et la surface périphérique intérieure de l'écrou (2) ; et
des joints (5) fixés respectivement aux deux extrémités axiales de la surface périphérique intérieure de l'écrou (2) et des ouvertures d'étanchéité aux extrémités axiales de l'espace intérieur,
**caractérisée en ce que**
les joints (5) comprennent un joint intérieur dans la direction axiale et un joint extérieur dans la direction axiale et au moins le joint intérieur a une capacité d'étanchéité telle qu'une pression dans l'espace intérieur devient supérieure à une pression à l'extérieur de l'espace intérieur par le gaz fourni par la partie d'alimentation en gaz.

2. La vis à billes selon la revendication 1, dans laquelle la partie d'alimentation en gaz comprend un orifice de décharge (21) configuré pour décharger le gaz dans l'espace intérieur, et l'orifice de décharge (21) est disposé au niveau d'au moins une partie axialement médiane et une partie d'extrémité axiale de la surface périphérique intérieure de l'écrou (2).

3. La vis à billes selon la revendication 1, dans laquelle
l'écrou (2) comprend un chemin de retour de billes configuré pour renvoyer les billes (3) d'un point d'extrémité à un point de départ du chemin de roulement de billes (11),
un composant de circulation (13 ; 15) est fixé à l'écrou (2) et forme le chemin de retour des billes, et
un espace entre l'écrou (2) et le composant de circulation (13 ; 15) est rendu étanche avec un matériau d'étanchéité (31).

4. La vis à billes selon la revendication 3, dans laquelle le composant de circulation (13 ; 15) est fixé à l'écrou (2) par l'intermédiaire d'un composant de fixation (14), et un espace entre le composant de fixation (14) et l'écrou (2) est rendu étanche avec le matériau d'étanchéité (31).

5. La vis à billes selon l'une quelconque des revendications 1 à 4, dans laquelle la partie d'alimentation en gaz est configurée pour fournir des gouttes d'huile lubrifiante et le gaz à l'espace intérieur pour effectuer une lubrification huile-air ou une lubrification par brouillard d'huile.
